(19) Europäisches Patentamt
European Patent Office
Office européen des brevets

(11) **EP 1 887 775 A2**

(12) **EUROPEAN PATENT APPLICATION**

(43) Date of publication:
**13.02.2008 Bulletin 2008/07**

(51) Int Cl.:
**H04M 19/00** (2006.01)

(21) Application number: **07112953.0**

(22) Date of filing: **23.07.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU**<br><br>(30) Priority: **10.08.2006 FR 0653340** | (71) Applicant: **Alcatel Lucent**<br>**75008 Paris (FR)**<br><br>(72) Inventor: **Bouzidi, Jean-Pierre**<br>**22300, LANNION (FR)** |

(54) **Electrical power supply method and device for telecommunication networks**

(57)   The present invention concerns an electrical power supply method for a cable telecommunication network, this method employing a first capacitor (C1) and a second capacitor (C2), this second capacitor (C2) being adapted to supply power to at least one element of this telecommunication network.

In accordance with the invention, this method is characterized in that it comprises the following steps:
- the step of forming, in a first operating configuration, a circuit for charging the first capacitor (C1) with a supply voltage (-VBat) and a circuit for discharging the second capacitor (C2) including the element to be supplied with power,
- the step of forming, in a second operating configuration, a circuit for charging the second capacitor (C2), including the charged first capacitor (C1), and having between its terminals a voltage difference of the order of the supply voltage (-Vbat), and
- the step of alternating these first and second operating configurations.

FIG.2

EP 1 887 775 A2

**Description**

The present invention concerns an electrical power supply method and an electrical power supply device for cable telecommunication networks.

The operation of a telecommunication network involves many devices requiring an electrical power supply. In the case of a cable telephone network, for example, it is necessary to supply power to servers managing the connections between terminals and to the terminals, as described in detail hereinafter:

- In the case of a connection server, it is necessary to provide a power supply having a particular power, for example of the order of 200 W, to ensure correct operation of the server.
  However, the power supply to this kind of server may be subject to micro-outages during which the server ceases to be connected to a power supply. This is why it is necessary to provide the server with autonomous power supply means for supplying the required power during the period of the micro-outage, generally of the order of 5 ms.
  Known autonomous power supply means comprise inductors, for charging capacitors, or a plurality of capacitors disposed in parallel to store energy in proportion to the sum of their capacitances. Such means are therefore of large overall size, which proves to be a problem, in particular with regard to reducing the size of these connection servers.
- In the case of telecommunication terminals, it is necessary to provide a power supply at a particular voltage. This voltage causes currents to flow in the telephone lines, however, these currents representing power losses suffered by the operator of the network. These losses are particularly significant in the case of short line connection of telecommunication terminals.

To give an idea of the orders of magnitude involved, a subscriber telephone line can be simulated by a resistor having a resistivity of the order of 1300 ohms in the case of a short line connection or 2400 ohms in the case of a long line connection. A voltage of 48 V is generally maintained at the terminals of a line so that a minimum current of the order of 20 mA flows in the line of each subscriber, this current reaching 40 mA in the case of a short line.

The additional dissipated power associated with this current is of the order of 0.5 W for a telecommunication terminal port, which represents an average additional dissipated power of the order of 150 W for a server conventionally connected to 2000 terminals, assuming, in accordance with the usual statistics, that 300 of those terminals are in use simultaneously.

This additional dissipated power proves to be a problem because it raises the temperature of the server by several degrees and increases the transfer power necessary for supplying power to the terminals.

Thus it may be estimated that the additional power required by a server because of these currents is of the order of 300 W from a total power of 1100 W.

The present invention aims to remove at least one of the drawbacks referred to hereinafter.

It results from the observation that the problems referred to hereinabove can be solved by a method of the same type used to supply top-up power to a server in the case of a micro-outage or to control the value of the current flowing in the telephone lines.

This is why the invention concerns an electrical power supply method for a cable telecommunication network, this method employing a first capacitor and a second capacitor, this second capacitor being adapted to supply power to at least one element of this telecommunication network, characterized in that it comprises the following steps:

- the step of forming, in a first operating configuration, a circuit for charging the first capacitor with a supply voltage and a circuit for discharging the second capacitor including the element to be supplied with power,
- the step of forming, in a second operating configuration, a circuit for charging the second capacitor, including the charged first capacitor, and having between its terminals a voltage difference of the order of the supply voltage, and
- the step of alternating these first and second operating configurations.

This kind of power supply method supplies power to at least one element of a telephone network by discharging a single capacitor. It therefore has the advantage of using a limited number of simple and reliable components because this single capacitor, charged by means of another capacitor, supplies electrical power to one element of the network.

The limited number of components used reduces the size of the device using this method and therefore its cost.

Moreover, a method of this kind can either supply the necessary power to a connection server during a micro-outage or limit the currents flowing in the lines to that necessary for the supply of power to telecommunication terminal lines, as described hereinafter.

Because of this, the fabrication of this kind of device can be optimized to reduce the fabrication costs by producing a large number of similar devices for two different applications.

In one embodiment, the method includes the step of discharging the first capacitor in the second operating configuration via a resistor connected to a variable voltage source.

Thus it is possible to control the charging of the first capacitor and therefore of the second capacitor. In fact, in one embodiment the value of this variable voltage is determined as a function of the charge required in the second capacitor.

In one embodiment, the method includes the step of alternating the first and second operating configurations with a period depending on the charging and discharging time of the first capacitor and the second capacitor.

In one embodiment, the method includes the step of charging the second capacitor with a voltage of the order of twice the supply voltage in the second operating configuration, that value enabling the supply of the required power to a server suffering a power supply micro-outage.

In one embodiment, the method includes the additional step of discharging the second capacitor into a resistor having a high resistance, typically several kohms, to provide a voltage supply, or a relatively low resistance, typically a few ohms, to provide a current supply.

The invention also concerns an electrical power supply device for a cable telecommunication network, this device comprising a first capacitor and a second capacitor, this second capacitor being adapted to supply power to at least one element of this telecommunication network, characterized in that it comprises means for:

- forming, in a first operating configuration, a circuit for charging the first capacitor with a supply voltage and a circuit for discharging the second capacitor including the element to be supplied with power,
- forming, in a second operating configuration, a circuit for charging the second capacitor including the charged first capacitor and having between its terminals a voltage difference of the order of the supply voltage, and
- alternating these first and second operating configurations.

Such a device can either supply a cable network element, server or terminal, with top-up power in the case of a micro-outage or supply a current controlled by a very limited number of components, which limits its size and its cost compared to prior art devices.

In one embodiment, the device includes means for determining the value of a voltage applied to a terminal of the first capacitor as a function of the charge required in the second capacitor.

In one embodiment, the device includes means for alternating the first and second operating configurations with the aid of time control depending on the charging and discharging times of the first capacitor and the second capacitor.

In one embodiment, the device includes means for charging the second capacitor with a voltage of the order of twice the supply voltage in the second operating configuration.

In one embodiment, the device includes a Zener diode for controlling a charging threshold of the second capacitor.

In one embodiment, the device includes a transistor for controlling the modification of the voltage or the current supplied to power an element.

In one embodiment, the device includes a diode between the first and second capacitors to discharge these capacitors in separate circuits.

In one embodiment, the device includes a resistor for discharging the second capacitor, this resistor having a value of the order of several kohms to provide a voltage supply or of several ohms to provide a current supply to the element supplied with power.

Other features and advantages of the invention will become apparent from the description of one embodiment of the invention given hereinafter, by way of nonlimiting example and with reference to the appended figures, in which:

- figure 1 is a theoretical diagram of a circuit according to the invention, and
- figures 2, 3 and 4 are diagrams relating to different embodiments of a device according to the invention.

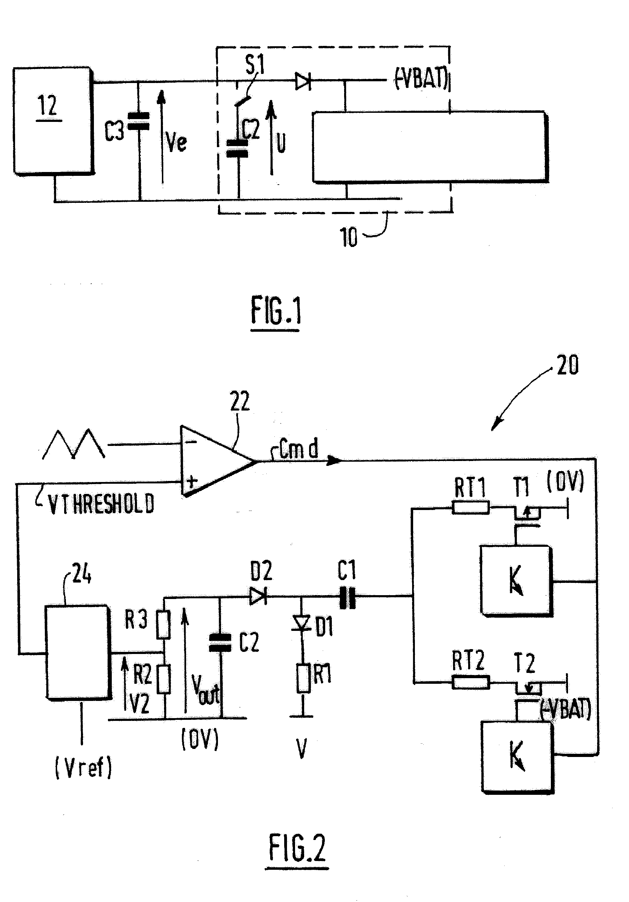

As shown in figure 1, a device 10 according to the invention uses a capacitor C2 to store an energy E in a capacitive form that can be expressed in joules by the equation:

$$E = (1/2)\ C2\ U^2$$

where C2 represents the capacitance of the capacitor C2 in farads and U represents the voltage in volts between the terminals of the capacitor C2.

The device 10 is used to compensate failure of the power supply to a server 12 by means of a switch S1 that is kept open provided that the power supply of the server 12 is operating correctly.

However, in the event of failure of that power supply, this switch S1 is closed. In this case, the value of C2 is such that the power P supplied and the voltage Vout applied by the capacitor C2 during a period t, typically of 5 ms, correspond to a given value P of the power required during a period t given by the equation:

$$P.t = (1/2)Ce[(Ve)^2 - (Vout(t))^2] \qquad (i)$$

in which Ce represents the sum of the capacitances of the capacitors C2 and C3 in parallel, the capacitor C3 being provided to filter the power supplied, and Ve represents the voltage at the terminals of the capacitors C2 and C3 when the switch S1 is closed, namely:

$$Ve = (C2.Vi2 + C3.Vi3)/(C2 + C3) \qquad (ii)$$

in which Vi2 represents the initial voltage at the terminals of the capacitor C2 and Vi3 represents the initial voltage at the terminals of the capacitor C3 before the switch S1 is closed.

Finally, in equation (i), Vout(t) represents the temporal variation with time t of the voltage applied to the load of constant power P connected to the equivalent capacitance Ce of the capacitors C2 and C3 charged to an initial voltage of Ve volts.

From equations (i) and (ii) it is possible to establish the minimum value of C2 as a function of the various values of the other components, guaranteeing a minimum time of operation for a given power P to be supplied.

Accordingly, taking numerical values C3 = C2/10, Vi2 = -40 V, Vi3 = -75 V appropriate to certain applications, it appears that the capacitor C2 must have a capacitance greater than 451 microfarads to guarantee an operating voltage of 40 V and to obtain a power of 200 W for 5 ms, i.e. an energy of 1 joule.

Figure 2 shows a first example of a device 20 according to the invention using such a capacitor C2, this device 20 being provided with a first capacitor C1 of low value compared to the capacitor C2, for example a value C1 of 150 nF.

A first terminal of this capacitor C1 is connected to FET switches T1 and T2 associated with protection and current limiter resistors RT1 and RT2 for limiting the charging currents in each cycle of operation of the device and with control switches Cir1 and Cir2 whereby these switches T1 or T2 can be operated alternately.

RT1 and RT2 have resistances of the order of 100 ohms to 1000 ohms or more depending on the maximum current values tolerated and the application. For a voltage mode device C2 the resistances of the resistors RT1 and RT2 can be of the order of 1000 ohms to limit the charging currents while for a current mode device C2 the resistances of the resistors RT1 and RT2 can be of the order of 100 ohms to provide the output current of the device.

Thus it is possible to provide alternately a potential of 0 V or of -Vbat at a first terminal of the capacitor C1, the latter potential being measured relative to a value of 0 V to which a first terminal of the capacitor C2 is connected.

A second terminal of the capacitor C2 is connected to a first resistor R3 in series with a second resistor R2 having a resistance of the order of 100 kohms. The high resistance of the resistor R2 minimizes the discharging of the capacitor C2 in the case of application of the voltage device to providing an autonomous power supply for a server of given power.

In the case of an application of the device 20 to limiting the current flowing in telephone lines, the resistor R2 represents the resistance for measuring the current supplied to the telephone lines represented by the resistor R3, this disposition of the resistors R2 and R3 facilitating the measurement of the current in the load because one of the terminals of the resistor R2 is connected to a fixed potential of 0 volt.

A first diode D2 is connected to the second terminal of the capacitor C2 and to a node formed by the second terminal of the first capacitor C1 and a second diode D1 connected to a resistor R1, the latter also being connected to a potential V varying between 0 and -Vbat according to the maximum voltage required at the terminals of the capacitor C2, as explained hereinafter.

In this embodiment, the resistor R1 has a resistance of 51 ohms and the diodes D1 and D2 are 1N4148 diodes, these values producing a voltage Vout at the terminals of the capacitor C2 equal to at least twice the voltage -Vbat, that is to say -96 V for a voltage V connected to -Vbat equal to -48 V, as described in detail hereinafter, distinguishing two modes of operation of the device 20:

- In a first configuration, the capacitor C1 is connected to a null voltage source T1 and the resistor R1 is connected to a voltage V equal to -Vbat. In this case, the diode D1 conducts and the capacitor C1 is therefore charged with a minimum voltage difference of the order of -Vbat or more according to the duration of this first configuration.
- In a second configuration, the capacitor C1 is connected to the source T2 of voltage -Vbat. In this case, the diode D1 does not conduct but the diode D2 does conduct, and so the capacitors C2 and C1 in series must provide a potential difference of -Vbat even though the capacitor C1 has a potential difference of

- Vbat at the outset between its terminals i.e. -2Vbat or more depending on the duration of the first configuration, on changing to the second configuration.

This voltage difference at the terminals of the second capacitor C2 supplies the power required to supply the one joule of energy required during the time period corresponding to a micro-outage.

A regulator including a comparator 22 controls the value of the voltage to which the capacitor C2 is charged so that a chosen limit value is not exceeded. The chosen voltage limit value is fixed by the ratio of the resistances of the resistors R3 and R2. Thus the regulator is such that the time to charge the capacitor C1 is regulated by a control signal Cmd that modifies the duration of the first configuration.

This signal Cmd is the result of comparing an alternating signal of fixed frequency and the average voltage representative of the voltage to which the capacitor C2 is charged so that, if the voltage to which the capacitor C2 is charged is below a fixed limit, the signal Cmd increases the charging time of the capacitor C1, the consequence of which is to increase the value of the voltage to which the capacitor C2 is charged.

Conversely, for a voltage to which the capacitor C2 is charged above the fixed limit, the control signal Cmd reduces the charging time of the capacitor C1, the consequence of which is to reduce the value of the voltage to which the capacitor C2 is charged.

Thus the control system described continually controls the value of the voltage to which the capacitor C2 is charged by controlling the time for which the capacitor C1 is charged.

The regulator employs conventional feedback by an element 24 to establish the distance between the voltage V2 proportional to the voltage Vout of the capacitor C2 and a fixed reference voltage Vref.

That difference is averaged to obtain an average error voltage which is amplified to deliver a variable threshold voltage VThreshold that varies as a function of the value of the voltage V2 relative to the reference voltage Vref, the voltage obtained in this way being representative of the voltage to which the capacitor C2 is charged.

The voltage VThreshold is applied to a first input of the comparator 22, the other input of this comparator 22 being connected to receive an alternating signal of triangular waveform in order to vary the duty of the output signal of the comparator as already described.

For a high voltage VThreshold close to the maximum value of the alternating signal, the output signal Cmd of the comparator is at a low level for a duration that is short compared to the duration of the high level.

Conversely, for a voltage VThreshold close to the minimum voltage of the alternating signal, the output signal Cmd of the comparator is at a high level for a duration that is short compared to the duration of the low level.

Thus this control signal Cmd controls conduction in the transistors T1 and T2 and therefore the voltage to which the capacitor C1 is charged and thereby the voltage to which the capacitor C2 is charged.

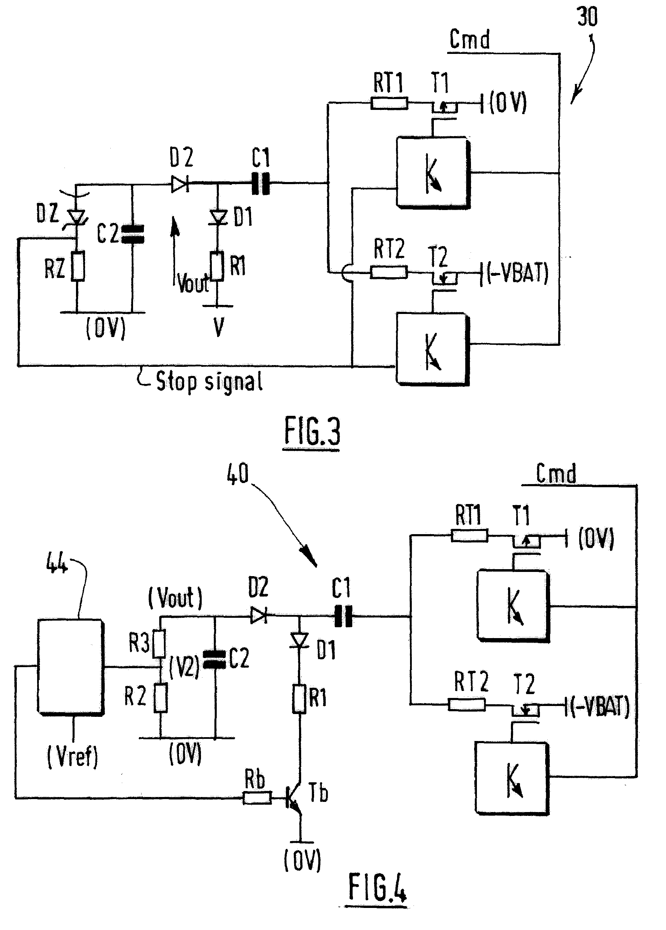

Figure 3 represents a second embodiment of a device 30 according to the invention. In this case, a Zener diode DZ is used such that the voltage Vout at the terminals of the capacitor C2 does not exceed the Zener voltage of the diode, namely -90 V in this embodiment. In this embodiment, the time for which the capacitor C1 is charged in the first configuration cannot be modified.

Apart from these differences, the device 30 from figure 3 is used in an analogous way to the device 20, that is to say in two steps described hereinafter:

- In a first step, the capacitor C1 is connected to a null voltage source T1 and the resistor R1 is connected to a voltage V equal to -VBat. In this case, the diode D1 conducts and the capacitor C1 is therefore charged with a voltage difference of the order of -Vbat between its terminals.
- In a second step, the capacitor C1 is connected to a voltage source T2 at a potential of -VBat. In this case, the diode D1 no longer conducts but the diode D2 begins to conduct.

The capacitor C1 initially having a voltage of -VBat between its terminals, the capacitor C2 is charged with a potential difference of -2VBat between its terminals that enables the required power of 1 joule to be supplied in the case of a micro-outage.

Once the capacitor C2 has reached the Zener voltage, a Stop signal terminates this step. In this embodiment, the control signal Cmd is a squarewave signal of fixed frequency and period Te.

To estimate the time necessary for the capacitor C2 to reach a fixed voltage, for this second embodiment the timing of the charging of the capacitor C2 can be approximated by the temporal equation for the voltage at the terminals of the capacitor C2.

In fact the equation for the temporal evolution of the charge in C2 is not very different from the following equation for the voltage V connected to -VBat, considering the resistance of R1 to be negligible compared to the resistances of RT1, RT2:

$$VC2(nTe) = -VBat(1 + [1 - (\alpha.C1/(C1 + C2))]^n) - VBat \text{ (iii)}$$

where $\alpha = 1 - e^{(-t0/(R.Ce))}$,

and in which n is an integer and Te represents the period of the control signal, i.e. the time between each cycle of charging and discharging the capacitors C1 and C2 and nTe represents the time from starting the process of charging the capacitor C2.

Moreover, t0 represents the times of charging and discharging the capacitors C1 and C2, R represents the sum of the resistances of RT1 and RT2 and Ce represents the equivalent capacitance of the capacitors C1 and C2 in series, namely C1.C2/(C1 + C2).

Furthermore, VC2(nTe) represents the temporal evolution of the voltage at the terminals of the capacitor C2.

From this equation (iii), the time Ta taken to charge the capacitor C2 to the potential Va is:

$$Ta = n \, Te$$

where n = In (1 - (Va-Vbat)/VBat)/In (1 - $\alpha$ C1/(C1 + C2))

with the values C1 = 150 nF, C2 = 451 $\mu$F, -VBat = -40 V, Te = 20 $\mu$s, T0 = 10 $\mu$s, for RT1 = RT2 = 1000 ohms, Va = -75 V, the time Ta necessary to reach Va = -75 V at the capacitor C2 is approximately 3.7 s.

Figure 4 represents a third embodiment of the invention conforming to the theory already described. In this variant, a transistor Tb is employed at the terminals of the resistor R1 to vary the voltage at the terminals of the resistor R1 with the aid of a control current supplied by a regulator 44 identical to the regulator 24.

For a charging voltage of the capacitor C2 or an output current in R2 and R3 above the fixed limit, the regulator reduces the bias current of the transistor Tb via the resistor Rb, the effect of which is to increase the overall resistance formed by the collector-emitter resistance of the transistor Tb and the resistor R1.

This increase in resistance limits the discharging of the capacitor C1, and therefore the charging of the capacitor C2, which leads to a reduction of the voltage at the terminals of the capacitor C2 and the supply current in the resistors R2 and R3.

Conversely, for a voltage to which the capacitor C2 is charged or an output current through the resistors R2 and R3 below a fixed limit, the regulator 44 increases the bias current of the transistor Tb via the resistor Rb, the effect of which is to reduce the overall resistance formed by the collector-emitter resistance of the transistor Tb and the resistor R1.

This reduction increases the discharging of the capacitor C1 and therefore the charging of the capacitor C2, thereby increasing the voltage at the terminals of the capacitor C2 or the supply current in the resistors R2 and R3.

As already indicated, the devices 20, 30 and 40 described hereinabove can be used to supply top-up power to a connection server or to control the current flowing in the lines of the terminals.

In this latter case, a resistor R2 can be used having a low resistance, of the order of 10 ohms, and a capacitor C2 having a capacitance of the order of 20 microfarads.

The current flowing in the telephone line represented by the resistor R3 with a value from 0 ohm to 2 kohms is fixed and limited by the control system described, for example, with reference to figure 2, with the aim of controlling the charging time of the capacitor C1, or with reference to figure 4, with the aim of controlling the voltage to which the capacitor C1 is charged.

For this current control application, the potential V in figures 2 and 4 has a value of 0 volt.

In other words, the current flowing in the lines represented by the resistor R3 is controlled by controlling the discharging of the capacitor C2, which is the source of the current flowing in these lines in a device according to the invention.

## Claims

1. Electrical power supply method for a cable telecommunication network, this method employing a first capacitor (C1) and a second capacitor (C2), this second capacitor (C2) being adapted to supply power to at least one element of this telecommunication network, **characterized in that** it comprises the following steps:

   - the step of forming, in a first operating configuration, a circuit for charging the first capacitor (C1) with a supply voltage (-VBat) and a circuit for discharging the second capacitor (C2) including the element to be supplied with power,

- the step of forming, in a second operating configuration, a circuit for charging the second capacitor (C2), including the charged first capacitor (C1), and having between its terminals a voltage difference of the order of the supply voltage (-Vbat), and
- the step of alternating these first and second operating configurations.

2. Method according to claim 1 including the step of discharging the first capacitor (C1) in the second operating configuration via a resistor (R1) connected to a variable voltage source (V).

3. Method according to claim 1 or 2 including the step of determining the value of the voltage (V) variable as a function of the charge required in the second capacitor (C2).

4. Method according to claim 1, 2 or 3 including the step of alternating the first and second operating configurations with a period depending on the charging and discharging time of the first capacitor (C1) and the second capacitor (C2).

5. Method according to any one of the preceding claims including the step of charging the second capacitor (C2) with a voltage of the order of twice the supply voltage (-2VBat) in the second operating configuration.

6. Method according to any one of the preceding claims including the additional step of discharging the second capacitor (C2) into a resistor (R3) having a high resistance, typically several kohms, to provide a voltage supply, or a relatively low resistance, typically a few ohms, to provide a current supply.

7. Electrical power supply device (20, 30, 40) for a cable telecommunication network, this device comprising a first capacitor (C1) and a second capacitor (C2), this second capacitor (C2) being adapted to supply power to at least one element of this telecommunication network, **characterized in that** it comprises means for:

- forming, in a first operating configuration, a circuit for charging the first capacitor (C1) with a supply voltage (-VBat) and a circuit for discharging the second capacitor (C2) including the element to be supplied with power,
- forming, in a second operating configuration, a circuit for charging the second capacitor (C2), including the charged first capacitor (C1), and having between its terminals a voltage difference of the order of the supply voltage (-Vbat), and
- alternating these first and second operating configurations.

8. Device according to claim 7, including means for determining the value of a voltage (V) applied to a terminal of the first capacitor (C1) as a function of the charge required in the second capacitor (C2).

9. Device according to claim 8 including means for alternating the first and second operating configurations with the aid of time control depending on the charging and discharging times of the first capacitor (C1) and the second capacitor (C2).

10. Device according to claim 7, 8 or 9 including means for charging the second capacitor (C2) with a voltage of the order of twice the supply voltage (-2VBat) in the second operating configuration.

11. Device according to any one of claims 7 to 10 including a Zener diode for controlling a charging threshold of the second capacitor (C2).

12. Device according to any one of claims 7 to 11 including a transistor (Tb) for controlling the modification of the voltage or the current supplied to power an element.

13. Device according to any one of claims 7 to 12 including a diode (D2) between the first capacitor (C1) and the second capacitor (C2) to discharge these capacitors (C1, C2) in separate circuits.

14. Device according to any one of claims 7 to 13 including a resistor (R2) for discharging the second capacitor (C2), this resistor (R2) having a value of the order of several kohms to provide a voltage supply or of several ohms to provide a current supply to the element supplied with power.

FIG.1

FIG.2

FIG.3

FIG.4